# EUROPÄISCHE PATENTSCHRIFT

(11) **EP 0 607 827 B1**
(45) Veröffentlichungstag und Bekanntmachung des Hinweises auf die Patenterteilung: **26.02.1997**
(21) Anmeldenummer: 94100215.6
(22) Anmeldetag: 08.01.1994
(51) Int. Cl.: B60H 1/00, B61D 27/00, B64D 13/08, B60H 1/12

(54) **Heizsystem**
Heating system
Système de chauffage

(30) Priorität: 18.01.1993 DE 9300566 U
(43) Veröffentlichungstag der Anmeldung: 27.07.1994
(73) Patentinhaber: AURORA Konrad G. Schulz GmbH & Co, D-69427 Mudau (DE)
(72) Erfinder: Kern, Alfred, D-63936 Schneeberg (DE); Wolf, Hannes, D-74722 Buchen (DE)
(74) Vertreter: Baronetzky, Klaus, Dipl.-Ing.

(56) Entgegenhaltungen:
- EP-A- 0 187 906
- EP-A- 0 521 269
- DE-A- 1 530 687
- DE-C- 729 943

## Beschreibung

Die Erfindung betrifft ein Heizsystem gemäß dem Oberbegriff von Anspruch 1.

Derartige Heizsysteme werden als Untersitz-Heizgeräte für Busse, Straßenbahnen und andere Großraumfahrzeuge zur Beheizung des Fahrgastraumes eingesetzt. Hierzu ist ein Wärmetauscher mit einem Gebläse in einem Gehäuse kombiniert, wobei ein Luftauslaß ein Gitter als Berührungsschutz aufweist. Die Heizsysteme sind je der Außenwand des Fahrzeugs nah benachbart und blasen unter dem Sitz zum Mittelgang aus, wobei die Luftströmung sich etwas aufweitet, so daß die abgegebene Wärmeleistung nach und nach im Fahrzeug verteilt werden soll.

Nachteil derartiger Untersitz-Heizgeräte ist es, daß die ausströmende Luft recht punktuell den vor dem Luftauslaß des Heizsystems befindlichen Bereich beaufschlagt, so daß die abgegebene Wärme schlecht verteilt wird. Auch heizen sich angeblasene Teile wie Bankstützen oder -streben durch kontinuierliches, lang andauerndes Anblasen derart stark auf, daß für die Fahrgäste Verbrennungsgefahr besteht.

Daher ist man in vielen Fällen von der Untersitz-Beheizung abgekommen und hat Konvektoren, Unterflurheizer oder Überflur-Kanalheizer verwendet, die den Vorteil haben, die Verteilung der Wärme wesentlich zu verbessern. Da die Wandflächen mit längs der Außenwand verlaufenden Kanalheizern warmgehalten werden können, lassen sich die gefürchteten Fall-Kaltluftströme, die ein Komfortempfinden regelmäßig verhindern, vermeiden. Nachteilig ist hierbei allerdings, daß der Fußraum der Fahrgäste etwas eingeschränkt wird.

Ferner ist es aus der DE-OS 15 05 253 an sich bekannt, einen möglichst breiten, laminaren Luftstrom mit einer gleichmäßigen Temperaturverteilung zu ermöglichen. Zwar sind in dieser Druckschrift auch Omnibusse angesprochen, eine weitergehende Luftverteilung ist jedoch nicht vorgesehen.

Schließlich zeigt die DE-PS 729 943 eine Luftheizung für Eisenbahnwagen, bei denen mindestens ein Luftstrom einer Trennwand oder einem anderen Luftstrom zugewandt ist, so daß eine großflächige Verteilung der Luftströmung in alle Richtungen entsteht. Eine starke Reduktion der Strömungsgeschwindigkeit ist beabsichtigt, und durch die gezielte und engwinkelige Luftumlenkung entstehen erhebliche Strömungsverluste. Die Außenwand des Fahrzeugs soll mit einer Art Luftschleier abgedeckt sein, der jedoch die kalten Fallwinde am Fenster bei entsprechenden Temperaturdifferenzen teils unterstützt, so daß die Belüftung insgesamt nicht zugarm ist.

Demgegenüber liegt der Erfindung die Aufgabe zugrunde, ein Heizsystem für Fahrzeuge gemäß dem Oberbegriff von Anspruch 1 zu schaffen, der eine verbesserte Wärmeverteilung mit einer preisgünstigen Herstellbarkeit kombiniert, wobei auch eine Nachrüstbarkeit in Anpassung an unterschiedliche Temperaturzonen gegeben sein soll.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, daß ein Untersitzheizgerät verwendet wird, dessen Luftauslaß schräg nach vorne und/oder schräg nach hinten zur Fahrzeug-Außenwand hin bläst. Dadurch wird nicht nur der gefürchtete Kaltluft-Fallstrom verhindert bzw. aufgefangen. Die Luftverteilung wird aufgrund des Cuanda-Effektes an der Außenwand erheblich verbessert, so daß im Gegensatz zu dem bekannten Untersitz-Heizgeräten eine gleichmäßige Luftverteilung ähnlich den Kanalheizern erzielbar ist.

Ein weiterer besonderer Vorteil der Erfindung gegenüber Kanalheizern oder Konvektoren besteht darin, daß an der Außenwand keine störenden Kanäle oder Konvektoren angeordnet sind.

Dennoch ist die Lösung erheblich preisgünstiger als Konvektoren oder Unterflurheizer, wobei sich zudem die Möglichkeit eröffnet, durch zusätzliches Einhängen von weiteren Untersitzheizern an bislang nicht mit Heizsystemen versehenen Fahrgastsitzen die Heizleistung variabel an unterschiedliche Klima- und Temperaturzonen anzupassen. Beispielsweise kann für Busse, die für die skandinavischen Länder bestimmt sind, ohne weitere Umbaukosten lediglich die doppelte Anzahl von Heizsystemen eingehängt werden, wie sie bei der Lieferung in südliche Länder vorgesehen ist.

Auch ist die Verbrennungsgefahr für Fahrgäste erheblich vermindert. Erfahrungsgemäß neigen Fahrgäste insbesondere bei einem plötzlichen Aussteigen zur Unaufmerksamkeit, so daß sie versehentlich an heißen Stützstreben entlangstreifen können, was unangenehme Verbrennungen zur Folge haben kann, wenn die betreffende Stützstrebe gerade unmittelbar vor dem Luftaustritt des bekannten Untersitz-Heizgerätes lag.

Erfindungsgemäß ist es vorgesehen, die aus dem oder den Luftauslässen austretende Warmluft so zur Fahrzeug-Außenwand zu leiten, daß sie den Beinbereich der Fahrgäste nicht direkt beaufschlagt. Der Luftaustrittswinkel und die Anordnung der Heizsysteme kann entsprechend den Erfordernissen angepaßt werden wobei auch ohne weiteres eine asymmetrische Anströmung der Fahrzeug-Außenwand gewählt werden kann.

Es versteht sich, daß in modernen Großraumfahrzeugen wie Omnibussen und dergleichen ohnehin für eine ausreichende Wärmedämmung der Außenwand Sorge zu tragen ist, um allfällige Wärmeverluste möglichst gering zu halten. Dementsprechend führt die erfindungsgemäße Ausgestaltung der Heizsysteme nicht zu zusätzlichen Wärmeverlusten, wobei es bevorzugt ist, daß nicht Fensterscheiben, sondern gut wärmegedämmte Wandflächen der Fahrzeug-Außenwand von dem erfindungsgemäß umzulenkenden Luftstrom beaufschlagt werden.

Bei der Anströmung der Fahrzeug-Außenwand lehnt sich der Luftstrom an der Fahrzeug-Außenwand an, so daß die dort zugeleitete Warmluft unter großer Wurfweite nach vorne und/oder hinten verteilt wird und dann langsam und zugarm nach oben steigt.

Für Reinigungszwecke ist es günstig, daß die Untersitz-Heizgeräte an den Sitzen aufgehängt montiert sein können. Zweckmäßigerweise weist der Luftstrom dann etwas nach unten, um dann bei der Ablenkung an der Fahrzeug-Außenwand dicht über dem Fahrzeugboden entlangzustreichen. Die Luftumlenkung erfolgt bei Verwendung eines einzigen Gebläses für jedes Heizsystem zweckmäßig über Luftlenker aus Kunststoff oder Blech, die am besten etwas gekrümmt sind, um die Umlenkverluste gering zu halten. Wahlweise kann auch ein Luftumlenkkeil, also einen entsprechenden Formkörper an der Fahrzeug-Außenwand, zur Unterstützung der Luftumlenkung eingesetzt werden, obwohl dies bei richtiger Ausgestaltung der Luftlenker nicht erforderlich ist.

Die Verteilung der Heizsysteme im Fahrzeug-Innenraum erfolgt am besten so, daß an voneinander beabstandeten Stellen abwechselnd rechts und links des Mittelgangs unter Sitzen je ein Heizsystem angeordnet ist, wobei beispielsweise an der Türseite zwei und gegenüberliegend ein Heizsystem vorgesehen sein kann, die dann sowohl nach vorne als auch nach hinten Luft schräg ablenken.

Ferner ist es beispielsweise aus der DE-PS 694 187 an sich bekannt, die Windschutzscheibe eines Kraftfahrzeugs anzublasen, und so eine Luftverteilung zu erzielen. Die Luftverteilung betrifft hier jedoch nur die Beaufschlagung der Windschutzscheibe, während es erfindungsgemäß vorgesehen ist, eine wärmegedämmte Fahrzeug-Außenwand durch Anströmung von einer hiervon beabstandeten Stelle gezielt als Umlenk- und Diffusorelement einzusetzen.

Weitere Vorteile, Einzelheiten und Merkmale ergeben sich aus der nachfolgenden Beschreibung eines Ausführungsbeispiels anhand der Zeichnung.

Es zeigt:
- Fig. 1: eine Draufsicht auf eine Ausführungsform eines erfindungsgemäßen Heizsystems in schematisierter Darstellung; und
- Fig. 2: eine ebenfalls schematisierte Ansicht der Verteilung von erfindungsgemäßen Heizgeräten in einem Fahrzeug-Innenraum.

Ein erfindungsgemäßes Heizsystem weist ein Heizgerät 10 auf, der ein ein Gebläse 12 und einen Wärmetauscher 14 umfassendes Gehäuse 16 einschließt.

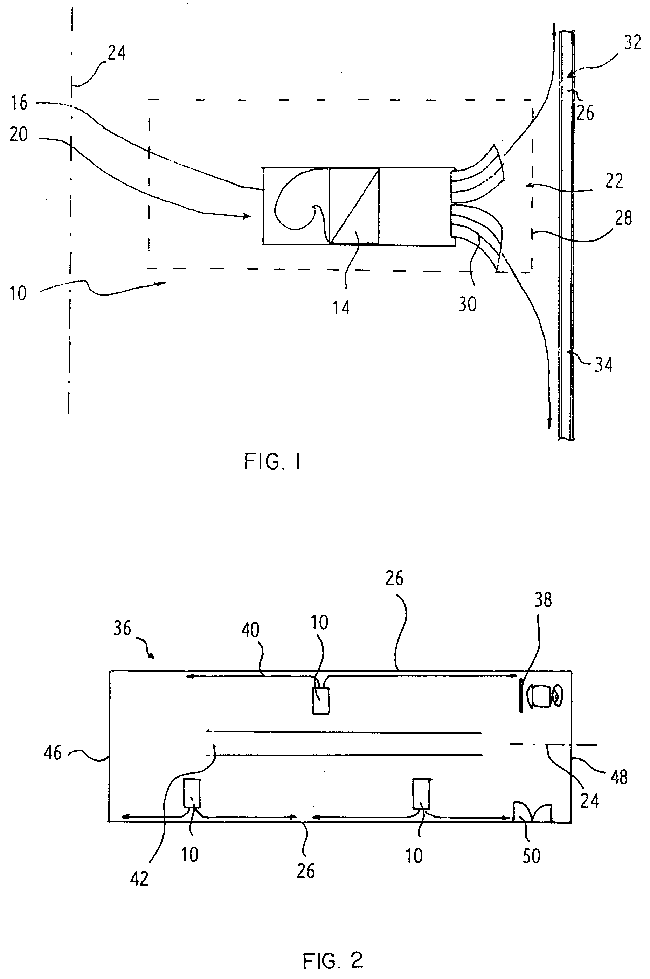

In der dargestellten Ausführungsform verläuft die Strömungsrichtung durch das Gehäuse 16 von links nach rechts, von einem Lufteinlaß 20 zu einem Luftauslaß 22. Die Strömungsrichtung erstreckt sich quer zur Längsachse 24 eines Fahrzeugs, in welches das Heizgerät 10 eingebaut ist. Der Lufteinlaß 20 ist benachbart einem Mittelgang angeordnet, während der Luftauslaß 22 zu einer Außenwand 26 weist. Das Heizgerät 10 ist unterhalb eines Fahrgastsitzes 28 angeordnet, der in Fig. 1 gestrichelt angeordnet ist. Der Fahrgastsitz 28 erstreckt sich von dem Mittelgang bis knapp vor die Außenwand 26.

Umluft durchströmt das Gehäuse 16, wobei die Umluft durch den Lufteinlaß 20 von dem Gebläse 12 angesaugt und durch den Wärmetauscher 14 geblasen wird, bevor sie an dem Luftauslaß 22 austritt. Aufgrund der im Stadtverkehr häufigen Türöffnung hat sich bei Omnibussen, Straßenbahnen und dergleichen eine reine Umluftheizung als ausreichend erwiesen. Es versteht sich, daß die Anordnung von Gebläse 12 und Wärmetauscher 14 auch umgekehrt werden kann, so daß die Luft durch den Wärmetauscher 14 gesaugt wird.

Der Luftauslaß 22 ist mit Luftlenkern 30 bestückt, die je als gebogene Rippen ausgebildet sind. Die Luft strömt zunächst nach Verlassen des Wärmetauschers 14 senkrecht zur Außenwand 26, in welcher Strömungsrichtung sie in die Luftlenker 30 eintritt. Aufgrund der Krümmung der Luftlenker 30 wird sie dann nach und nach in die gewünschte Strömungsrichtung umgelenkt. Ein Teil der Luftlenker 30 weist mit seinem Ausgang schräg nach vorne und Teil der Luftlenker 30 mit seinem Ausgang schräg nach hinten. Die die Luftlenker 30 dort je verlassenden Teilluftströme strömen mit einer relativ großen Strömungsgeschwindigkeit zur Außenwand 26 hin, wobei sie je an Prallbereichen 32 und 34 vor bzw. hinter dem Heizgerät 10 auf der Außenwand 26 auftreffen. Dort lehnt sich die Luftströmung aufgrund des Cuanda-Effektes je an die Außenwand an und streicht so weit an dieser entlang.

Alternativ können die Luftlenker auch als entsprechend ausgestaltete einfache Ausblas-Gitterelemente ausgeführt sein.

Die Prallbereiche 32 und 34 dienen zugleich als Diffusionsbereiche, wobei die Diffusion durch eine entsprechende Ausgestaltung der Oberfläche wie entsprechend geformte Luftlenkbleche unterstutzt werden kann. Auch ohne eine besondere Ausgestaltung entsteht dort eine Strahlaufweitung für die reflektierten Luftströmungen, die somit den Bereich vor und hinter dem mit dem Heizgerät 10 bestückten Fahrgastsitz 28 mit Warmluft versorgen. Aufgrund der Strahlaufweitung ergibt sich eine vergleichsweise gute Wärmeverteilung, wobei dennoch mit einer entsprechenden Anströmgeschwindigkeit der Prallbereiche 34 und 32 die Tragweite der Luftströmung für die gewünschten Zwecke ausreicht.

In dem dargestellten Ausführungsbeispiel beträgt der Strömungswinkel der freien Luftströmungen zwischen dem Luftauslaß 22 und den Prallbereichen 32 und 34 etwa 35° gegen die Längsachse 24 des Fahrzeugs und die Außenwand 26. Besonders günstig ist es, daß die Luftströmung ganz flach mit einer Stärke von nur 1 bis 2 cm an der Außenwand entlangstreicht, so daß der außen sitzende Fahrgast mit seinen Beinen nicht in den Bereich der vorderen freien Luftströmung gerät. Es versteht sich, daß die Anordnung des Heizgeräts 10 relativ zu dem Fahrgastsitz 28 und relativ zu dem Strömungswinkel der freien Luftströmungswege den Erfordernissen entsprechend angepaßt werden kann. Wenn beispielsweise das Heizgerät 10 weiter nach außen verlagert wird, sollten die Strömungswinkel entsprechend vergrößert werden, so daß sie spitzwinkliger zu der Außenwand 26 verlaufen.

Es versteht sich ferner, daß bei einem größeren Ablenkwinkel die Luftlenker 30 mit Maßnahmen zur Verhinderung von Wirbeln, wie in Strömungsrichtung eingebauten Wirbelblechen versehen sein können.

Nachdem häufig die Außenwand 26 bei neueren Großraumfahrzeugen aus Gründen der Vandalensicherheit auch innen mit Metallblechen überzogen ist, läßt sich ein weiterer günstiger Effekt erzielen: durch die Anströmung mit der heißen Umluft in den Prallbereichen 32 und 34 wird das Beschichtungsblech der Außenwand 26 an diesen Stellen aufgeheizt. Da Metall ein guter Wärmeleiter ist, verteilt sich die zugeleitete Wärme über das Blech, so daß es zusätzlich wie ein Radiator wirkt und darüberhinaus die Wärmeverteilung verbessert. Es versteht sich, daß es besonders in diesem Falle günstig ist, wenn das Blech kältebrückenfrei gegenüber der Außenhaut des Fahrzeugs montiert ist. Die Vermeidung von Kältebrücken wird allerdings bei derartigen Lösungen ohnehin angestrebt.

In Fig. 2 sind die Strömungsverteilungen in dem Großraumfahrzeug 36 dargestellt. Im Beispielsfalle sind 1 Heizgerät 10 auf der linken Fahrzeugseite und 2 Heizgeräte 10 auf der rechten Fahrzeugseite angeordnet. Die Türbereiche auf der rechten Fahrzeugseite sind bei dieser Ausgestaltung von der Warmluftversorgung ausgespart. Bei dieser Ausgestaltung versorgt jedoch der linke Heizgerät 10 den Fahrersitz des Busfahrers mit, wobei eine Trennwand 38 zwischen dam Bereich des Fahrers und dem Fahrgastraum nach außen hin verkürzt ist. Entsprechend der gewünschten Verteilung der Heizleistung kann bei einem Heizgerät 10 auch eine asymmetrische Luftverteilung erzielt werden. Beispielsweise können lediglich 25% der an dem Luftauslaß 22 abgegebenen Luft nach vorne und 75% nach hinten geleitet werden. Dies geschieht durch eine entsprechende Verminderung der Fläche und Anzahl der nach hinten gerichteten Luftlenker auf Kosten der nach vorne gerichteten Luftlenker, so daß der Luftauslaß 22 überwiegend von nach hinten gerichteten Luftlenkern abgedeckt ist.

Es versteht sich, daß eine Anpassung der gewünschten Luftströmungsverhältnisse nach vorne bzw. hinten je leicht und einfach durch Austauschen der Luftlenker 30 erfolgen kann. Hierzu ist es günstig, wenn die Luftlenker 30 als Standardteile vorgefertigt sind, die in einem entsprechenden Rahmen eingeschnappt werden können, der in den Luftauslaß 22 paßt. Zur Änderung der Strömungsverteilung ist dann lediglich der betreffende, der Mitte des Luftauslasses 22 benachbarte Strömungslenker um 180° zu drehen und erneut einzuschnappen.

Wie aus Fig. 2 ersichtlich ist, sind die Heizgeräte 10 je so beabstandet, daß die reflektierten Luftströmungen, die je mit Strömungspfeilen 40 angedeutet sind, gleichmäßig den Innenraum des Großraumfahrzeugs mit Warmluft beaufschlagen. Am wenigsten mit Warmluft beaufschlagt wird ein Mittelgang, der bei einem vergleichsweise leeren Fahrzeug allerdings ohnehin in der Regel weniger genutzt wird.

Es versteht sich, daß auch die Anordnung und Anzahl der Heizgeräte den Erfordernissen entsprechend gewählt sein kann. Beispielsweise kann bei einem vergleichsweise breiten Fahrzeug 36 mit beispielsweise einer Sitzreihe hinter der hinteren Tür auch die Rückwand 46 mit einem erfindungsgemäßen Heizgerät bestückt sein, das dann an 2 voneinander beabstandeten Prallbereichen diese Rückwand anstelle der Seitenwände anbläst.

Alternativ zur dargestellten Beheizung des Fahrerbereichs kann auch an einer Vorderwand 48, also vor der vorderen Tür 50, ein Heizgerät vorgesehen sein, das die Vorderwand 28 anbläst, so daß die reflektierte Luftströmung dem Fahrerbereich zugeleitet wird. Dieses Heizgerät 10 könnte dann einseitig wirken, so daß alle Luftlenker 30 in die gleiche Richtung weisen würden.

## Patentansprüche

1. Heizsystem für Fahrzeuge, insbesondere Großraum-Kraftfahrzeuge, mit einem Wärmetauscher (14) und einem Gebläse (10), die in einem einen Lufteinlaß (16) und mindestens einen zur Fahrzeug-Außenwand (26) hinweisenden Luftauslaß (22) aufweisenden Gehäuse untergebracht sind, dadurch gekennzeichnet, daß der Luftauslaß (22) mit Luftumlenkern (30) versehen ist, die die Luft schräg zur Fahrzeug-Außenwand (26) nach vorne und/oder hinten ablenken, so daß die Luft entlang der Fahrzeug-Außenwand nach vorne und/oder hinten strömt.

2. Heizsystem nach Anspruch 1, dadurch gekennzeichnet, daß die Luftlenker (30) gekrümmt sind und die Strömungsrichtung der aus dem Gehäuse (16) ausströmenden Luft von einer Ausrichtung quer zur Fahrzeuglängsrichtung zu einer Ausrichtung schräg zur Fahrzeuglängsrichtung umlenken.

3. Heizsystem nach einem der vorhergehenden Ansprüche, dadurch gekennzeichnet, daß mehrere Untersitz-Heizgeräte gegeneinander versetzt über den Raum verteilt sind.

4. Heizsystem nach einem der vorhergehenden Ansprüche, dadurch gekennzeichnet, daß der Luftauslaß (22) von der Fahrzeug-Außenwand (26) beabstandet unterhalb eines Fahrgastsitzes (28) angeordnet ist, wobei die Anordnung so gewählt ist, daß weder der schräg rückwärts noch der schräg vorwärts weisende Luftstrom den Beinbereich eines auf dem Fahrgastsitz (28) sitzenden Fahrgastes direkt beaufschlagt.

5. Heizsystem nach einem der vorhergehenden Ansprüche, dadurch gekennzeichnet, daß der Auftreffpunkt (Prallbereich 32, 34) des vorwärts weisenden Luftstroms auf der Fahrzeug-Außenwand (26) knapp vor dem Bein eines dort sitzenden Fahrgastes gewählt ist.

6. Heizsystem nach einem der vorhergehenden Ansprüche, dadurch gekennzeichnet, daß der Aufströmwinkel des Luftstroms zur Fahrzeug-Außenwand (26) um etwa 20 bis 60° und insbesondere etwa 35° beträgt.

7. Heizsystem nach einem der vorhergehenden Ansprüche, dadurch gekennzeichnet, daß die vorgesehene Strömungslänge der Strömung nach der Umlenkung an der Fahrzeug-Außenwand (26) mehr als 5 m beträgt.

8. Heizsystem nach einem der vorhergehenden Ansprüche, dadurch gekennzeichnet, daß auf einer Fahrzeugseite zwei Heizsysteme und auf der anderen ein Heizsystem installiert sind und bei Bedarf, z.B. in kälteren Klimazonen, dort eine Aufrüstung auf ein zweites vornehmbar ist.

9. Heizsystem nach einem der vorhergehenden Ansprüche, dadurch gekennzeichnet, daß die Fahrzeug-Außenwand (26) frei von Luftumlenkkeilen und dergleichen durch das Großraumfahrzeug verläuft.

10. Heizsystem nach einem der Ansprüche 1 bis 8, dadurch gekennzeichnet, daß seitlich an der Fahrzeug-Außenwand (26) jedem Heizsystem benachbart ein Luftumlenkkeil angeordnet ist.

11. Heizsystem nach einem der vorhergehenden Ansprüche, dadurch gekennzeichnet, daß die Luftlenker (30) so ausgebildet sind, daß sie die Luft asymmetrisch schräg nach vorne und hinten ablenken, wobei insbesondere der nach vorne weisende Luftauslaß (22) in einem etwas stumpferen Winkel und der nach hinten weisende Luftauslaß in einem etwas spitzeren Winkel zur Fahrzeug-Außenwand (26) verläuft.

## Claims

1. A heating system for vehicles, in particular large-capacity motor vehicles, having a heat exchanger (14) and a blower (10) which are accommodated in a housing having an air inlet (16) and at least one air outlet (22) directed towards the vehicle outer wall (26), characterised in that the air outlet (22) is provided with air deflectors (30) which deflect the air forwards and/or rearwards obliquely to the vehicle outer wall (26) so that the air flows forwards and/or rearwards along the vehicle outer wall.

2. A heating system according to Claim 1, characterised in that the air deflectors (30) are curved and they deflect the flow direction of the air flowing out of the housing (16) from an orientation transversely to the longitudinal direction of the vehicle to an orientation oblique to the longitudinal direction of the vehicle.

3. A heating system according to any one of the preceding Claims, characterised in that a plurality of underseat heating appliances are distributed around the interior, offset relative to one another.

4. A heating system according to any one of the preceding Claims, characterised in that the air outlet (22) is spaced apart from the vehicle outer wall (26) under a passenger seat (28), the arrangement being chosen so that neither the obliquely rearward directed air flow nor the obliquely forward directed air flow impinges directly on the leg region of a passenger sitting in the passenger seat (28).

5. A heating system according to any one of the preceding Claims, characterised in that the impingement point (impact zone 32,34) of the forward directed air flow on the vehicle outer wall (26) is chosen to be just in front of the leg of a passenger sitting at this location.

6. A heating system according to any one of the preceding Claims, characterised in that the angle of the air flow in an upward direction relative to the vehicle outer wall (26) is approximately 20 to 60° and, in particular, approximately 35°.

7. A heating system according to any one of the preceding Claims, characterised in that the intended length of the flow after deflection at the vehicle outer wall (26) is more than 5 m.

8. A heating system according to any one of the preceding Claims, characterised in that two heating systems are installed on one side of the vehicle and one heating system is installed on the other side, and, if necessary, for example in regions having a cold climate, a second system can be provided here.

9. A heating system according to any one of the preceding Claims, characterised in that the vehicle outer wall (26) extends through the large-capacity motor vehicle free of the air deflection wedges and the like.

10. A heating system according to any one of Claims 1 to 8, characterised in that an air deflection wedge is disposed laterally of the vehicle outer wall (26) adjacent each heating system.

11. A heating system according to any one of the preceding Claims, characterised in that air deflectors (30) are designed so that they deflect the air asymmetrically obliquely forwards and rearwards, wherein in particular the forwardly directed air outlet (22) extends at an approximately relatively obtuse angle and the rearwardly directed air outlet extends at an approximately relatively acute angle to the vehicle outer wall (26).

## Revendications

1. Système de chauffage pour véhicules notamment pour véhicules automobiles à grand compartiment, comprenant un échangeur thermique (14) et une soufflerie (10), les deux éléments étant installés dans un boîtier comprenant une entrée d'air (16) et au moins une sortie d'air (22) orientée vers la paroi extérieure (26) du véhicule, caractérisé en ce que la sortie d'air (22) est munie de déflecteurs (30) dirigeant l'air en direction de la paroi extérieure (26) du véhicule à un angle incliné vers l'avant et/ou vers l'arrière de sorte que l'air passe vers l'avant et/ou vers l'arrière le long de la paroi extérieure du véhicule.

2. Système de chauffage selon la revendication 1, caractérisé en ce que les déflecteurs (30) sont courbés et en ce que la direction du flux d'air expulsé du boîtier (16) dans un sens perpendiculaire par rapport à l'axe longitudinal du véhicule est déviée dans une direction orientée à un angle incliné par rapport à l'axe longitudinal du véhicule.

3. Système de chauffage selon l'une quelconque des revendications précédentes, caractérisé en ce que plusieurs appareils de chauffage installés sous les sièges sont répartis dans le compartiment de façon à être décalés les uns par rapport aux autres.

4. Système de chauffage selon l'une quelconque des revendications précédentes, caractérisé en ce que la sortie d'air (22) est disposée sous un siège pour voyageurs (28), à un écart donné par rapport à la paroi extérieure (26) du véhicule, la disposition étant choisie de sorte que le flux d'air orienté dans un angle incliné vers l'avant et/ou vers l'arrière ne touche pas la zone des pieds du voyageur occupant le siège (28) dans lequel l'appareil de chauffage est installé.

5. Système de chauffage selon l'une quelconque des revendications précédentes, caractérisé en ce que le point d'impact (zone d'impact 32, 34) du flux d'air orienté vers l'avant est la zone de la paroi extérieure (26) du véhicule située, à une faible distance, en face des pieds d'un voyageur assis à cet endroit.

6. Système de chauffage selon l'une quelconque des revendications précédentes, caractérisé en ce que l'angle d'impact du flux d'air sur la paroi extérieure (26) du véhicule est compris entre environ 20 et 60° et de préférence de environ 35°.

7. Système de chauffage selon l'une quelconque des revendications précédentes, caractérisé en ce que la longueur du flux d'air, après déflexion au niveau de la paroi extérieure (26) du véhicule, est supérieure à 5 m.

8. Système de chauffage selon l'une quelconque des revendications précédentes, caractérisé en ce que deux systèmes de chauffage sont installés sur un des côtés du véhicule et un seul système de chauffage est installé sur l'autre côté du véhicule mais qu'un deuxième système de chauffage peut être rajouté sur ce côté du véhicule, si nécessaire, par exemple dans des zones climatiques plus froides.

9. Système de chauffage selon l'une quelconque des revendications précédentes, caractérisé en ce que la paroi extérieure (26) d'un véhicule à grand compartiment est démunie de cales de déflexion d'air et éléments similaires et ce sur toute la longueur de la paroi.

10. Système de chauffage selon l'une quelconque des revendications 1 à 8, caractérisé en ce qu'une cale de déflexion d'air est disposée latéralement sur la paroi extérieure (26) du véhicule à proximité de chaque système de chauffage.

11. Système de chauffage selon l'une quelconque des revendications précédentes, caractérisé en ce que les déflecteurs (30) sont conçus de façon à dévier l'air de façon asymétrique dans un angle incliné vers l'avant et vers l'arrière, la sortie d'air (22) orientée vers l'avant présentant notamment un angle légèrement moins aigu et la sortie d'air orientée vers l'arrière présentant un angle légèrement plus aigu par rapport à la paroi extérieure (26) du véhicule.
